# EUROPEAN PATENT APPLICATION

(11) **EP 4 664 091 A1**
(43) Date of publication of application: **17.12.2025**
(21) Application number: 24181070.4
(22) Date of filing: 10.06.2024
(51) Int. Cl.: G01N 1/10, G01N 1/40, C01B 25/225, C01B 25/226

(54) **ASSEMBLY AND METHOD FOR PROCESSING A PHOSPHORIC ACID SAMPLE**

(71) Applicant: Prayon, 4480 Engis (BE)
(72) Inventor: Dethier, Thomas, 4480 Engis (BE); Van Lierde, Nicolas, 4480 Engis (BE); DIMOV DIMOV, Stefan, 4480 Engis (BE)
(74) Representative: Gevers Patents

(57) **Abstract**

The present invention relates to an assembly (10) for processing a phosphoric acid sample, comprising a sampling vessel (12) suitable for filtering the phosphoric acid sample under pressure, means for taking the phosphoric acid sample from a space (14) containing phosphoric acid and means for conveying the phosphoric acid sample out of the space to the sampling vessel, at the outlet of the sampling vessel, means for collecting at least one filtered volume of phosphoric acid sample. The invention also relates to a method for processing a phosphoric acid sample.

## Description

### Technical field

The invention pertains to an assembly and a method for processing a phosphoric acid sample, and especially an aqueous solution of phosphoric acid sample.

### Prior art

Document EP0131506 discloses an apparatus for taking a liquid sample from a mixture of liquid and solid. The apparatus is of the type comprising means for filtering said mixture and receiving the filtered liquid present is a production tank. The apparatus also comprises a chamber for storing liquid, connected by way of a first conduit to said filtering and receiving means, and a chamber for receiving a sample of liquid, connected by way of a second conduit to said filtering and receiving means and provided with means for discharge of the stored sample to the exterior, a closure member being disposed on said second conduit. The apparatus comprising two chambers connected in parallel to said filtering and receiving means, thus permitting filling or emptying of the chamber for receiving the sample independently of the storage chamber.

The drawback of this apparatus is that it does not allow rapid sampling. As a result, this device does not allow to effectively monitor production in the production tank.

There is therefore a need for a device that can take samples more quickly.

### Disclosure of the invention

A first object of the invention is to provide an assembly for processing a phosphoric acid sample, comprising a sampling vessel suitable for filtering the phosphoric acid sample under pressure; Means for taking the phosphoric acid sample from a space containing phosphoric acid and means for conveying the phosphoric acid sample out of the space to the sampling vessel; At the outlet of the sampling vessel, means for collecting at least one filtered volume of phosphoric acid sample.

According to an embodiment, the sampling vessel comprises a filter for filtering the phosphoric acid sample under pressure, preferably under air pressure.

According to an embodiment, the sampling vessel further comprises members from among Means for backwashing the filter, if applicable, Means for pressurizing the sampling vessel to filter the phosphoric acid sample under pressure, preferably under air pressure, Means for draining the assembly, Means for rinsing the assembly.

According to an embodiment, the means for collecting are suitable for collecting filtered volumes, at least one filtered volume being for evacuation and/or at least one filtered volume being for analysis.

According to an embodiment, the space containing phosphoric acid is a phosphoric acid production reactor, a pipe, a concentration point, a phosphoric acid pipe, a tank, an ageing tank, a weak phosphoric acid pipe, a dihydrate filter, a dehydration tank, a conversion tank.

According to an embodiment, the sample vessel comprises a container made of a material chosen in the group comprising polypropylene, polyvinyl chloride, polycarbonate, high density polyethylene, polyvinylidene fluoride, polytetrafluoroethene, Fiber Reinforce Plastic, Rubberlined carbon steel or stainless steels.

According to an embodiment, the means for taking are suitable for taking the phosphoric acid sample by gravity from the space containing phosphoric acid.

According to an embodiment, the sampling vessel further comprises an analyzing unit for analyzing at least one filtered volume, preferably the analyzing unit being suitable for analyzing the filtered volume by turbidity, conductimetry, mass spectrometry or pH measurement.

According to an embodiment, the sampling vessel further comprises, between the sampling vessel and the analyzing unit, an homogenization tank suitable for diluting the filtered volume for analysis.

The invention also relates to a method for processing a phosphoric acid sample, comprising the steps of Taking the phosphoric acid sample from a space containing phosphoric acid and conveying the phosphoric acid sample out of the space to a sampling vessel; Providing the sampling vessel with the phosphoric acid sample; Filtering by pressure the phosphoric acid sample in the sampling vessel; Collecting at least one filtered volume from the sampling vessel.

According to an embodiment, the step of collecting comprising collecting at least one filtered volume for evacuation and/or collecting at least one filtered volume for analysis.

According to an embodiment, the method further comprises a step of analyzing the filtered sample volume, preferably by turbidity conductimetry, mass spectrometry or pH measurement.

According to an embodiment, the method further comprises, in an homogenization tank, a step of diluting the filtered volume for analysis, preferably, a stirring occurring in the homogenization tank during the step of diluting.

According to an embodiment, the method further comprises several steps of analyzing the same filtered volume.

According to an embodiment, the sampling vessel comprises a filter for filtering the phosphoric acid sample under pressure, the method further comprising a step of creating a cake in contact of the filter.

In the framework of this document, the use of the indefinite article "a", "an" or the definite article "the" to introduce an element does not exclude the presence of a plurality of these elements. In this document, the terms "first", "second", "third" and the like are solely used to differentiate elements and do not imply any order in these elements.

In the framework of the present document, the use of the verbs "comprise", "include", "involve" or any other similar variant, as well as their conjugational forms, cannot exclude the presence of elements other than those mentioned. When the verb "comprise" is used for defining an interval by the terms "comprised between" two values, these two values should not be interpreted as excluded from the interval.

In the framework of the present document, the expression "phosphoric acid" comprises solutions containing phosphates ions. Preferably, the phosphoric acid solution has a concentration comprised between 5 and 62 wt.%; preferably between 10 and 54 wt. % ; more preferably between 15 and 45 wt. % expressed as P₂O₅ equivalent. The invention is also applicable for processing solution of phosphoric acid salts, any solution produced during (wet) phosphoric acid process, such as fluosilicic acid.

In the framework of the present document, the expression "phosphate source" comprises ore or rock containing in particular calcium phosphate in the form of apatite (and derivatives thereof including fluoro, chloro, hydroxy,... - apatite) or tricalcium phosphate or dicalcium phosphate or whitlockite or collophanite. It comprises also a phosphate salt such as ammonium phosphate salts, sodium phosphate salts, aluminium phosphate salts, iron phosphate salts, aluminium and iron phosphates salts, struvite or a mixture of salts and the like. Alternatively, the "phosphate source" can be a beneficiation residue including one or more of phosphate tailing and phosphate slimes. Beneficiation is a mining process step carried out after ore extraction from the ground. It preferably consists of mechanically separating minerals present in the phosphate ore (or "matrix") from each other. For example, phosphates can be mechanically separated from clay, and quartz (or sand). This can be achieved, e.g., by separation of the minerals as a function of their grain size or density.

All the embodiments of the apparatus according to the invention and the advantages of these embodiments apply mutatis mutandis to the present method, and vice versa.

### Brief description of the figures

Other characteristics and advantages of the present invention will appear on reading the following detailed description, for the understanding of which, it is referred to the attached figures where:
- Figure 1 illustrates an assembly according to the invention;
- Figure 2 illustrates an example of possible context of use;
- Figure 3 illustrates another example of possible context of use;
- Figure 4 illustrates another example of possible context of use;
- Figure 5 illustrates another example of possible context of use;
- Figure 6 illustrates another example of possible context of use.

The drawings in the figures are not scaled. Similar elements can be assigned by similar references in the figures. In the framework of the present document, identical or analogous elements may have the same references. The presence of reference numbers in the drawings cannot be considered to be limiting, in particular if these numbers are indicated in the claims.

### Description of specific embodiments of the invention

Description of preferred embodiments of the present invention are hereafter described with references to figures, but the invention is not limited by these references. In particular, the drawings or figures described below are only schematic and are not limiting in any way.

The invention relates to an assembly for processing a phosphoric acid sample, and especially an aqueous solution of phosphoric acid sample. The assembly comprises a sampling vessel suitable for filtering the phosphoric acid sample under pressure. The apparatus also comprises means for taking the phosphoric acid sample from a space containing phosphoric acid and means for conveying the phosphoric acid sample out of the space to the sampling vessel. At the outlet of the sampling vessel, the apparatus further comprises means for collecting at least one filtered volume of phosphoric acid sample. The invention eases the treatment of phosphoric acid because the filtration position is in the sampling vessel, outside the space containing the phosphoric acid. The phosphoric acid is collected from the space containing the phosphoric acid and filtered outside this space, in the sampling vessel. This enables samples to be taken more quickly. As a result, overall control is more efficient.

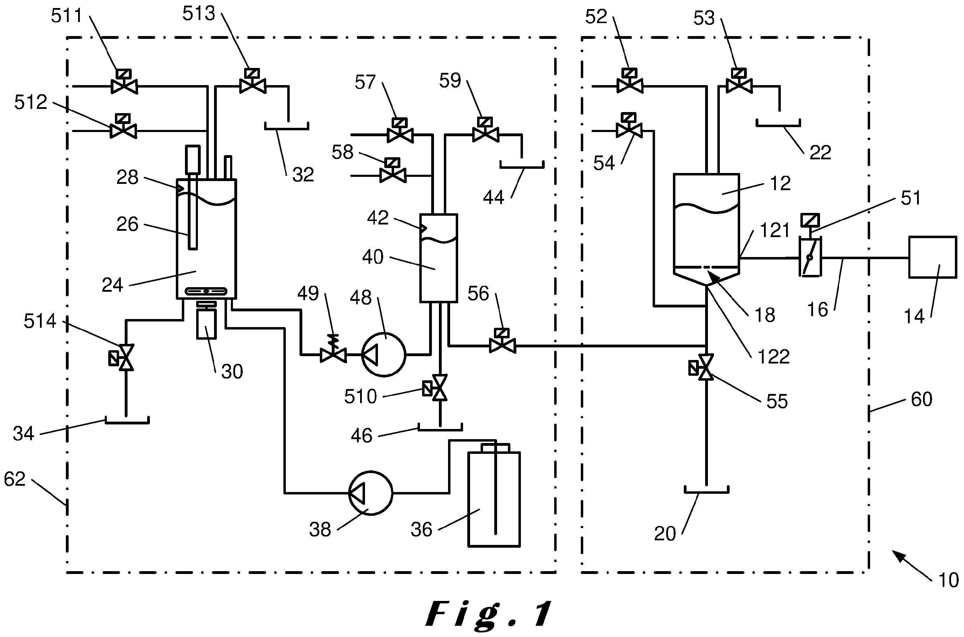

Figure 1 shows an assembly 10 for processing a phosphoric acid sample. The assembly enables the processing of the sample, such as filtration, dilution, analysis, etc. The sample to be treated comes from a space 14 containing phosphoric acid. The space 14 may be a phosphoric acid production reactor, a conduit or pipe or pipeline for conveying phosphoric acid (potentially weak phosphoric acid), a phosphoric acid ageing tank, a dihydrate filter pipe or vat, a dehydration tank, a decanter, a conversion tank, etc. In other words, it may be a phosphoric acid production reactor, a conduit or pipe or pipeline for conveying phosphoric acid (potentially weak phosphoric acid), a phosphoric acid maturation tank, a dihydrate filter, a dehydration tank, a decanter, a conversion tank, etc. In other words, it is a container in which the sample is present or circulates and from which the sample can be collected. Depending on the space 14, the phosphoric acid is more or less viscous, concentrated. For example, the phosphoric acid taken from a phosphoric acid production reactor may be thick. Thus, regardless of space 14, the phosphoric acid sample may be a sample of phosphoric acid slurry. By "slurry" is meant a sample comprising suspensions ranging from 0.5% to 40% solids.

Assembly 10 comprises a sampling vessel 12 suitable for filtering phosphoric acid sample from space 14. Assembly 10 may comprise a single sampling vessel 12 or a plurality of sampling vessels 12. The phosphoric acid sample is introduced into the sampling vessel 12 via the inlet 121. The sampling vessel 12 produces a filtered volume of phosphoric acid for further processing. For example, the filtered volume can be analyzed, in order to make decisions about the operation of a production line. Filtration within the sampling vessel can be carried out by pressure. Pressure allows faster filtration. In addition, pressure filtration enables a more viscous phosphoric acid sample to be filtered. The solids present in the phosphoric acid sample may result from imperfect crystallization. Filtration under pressure is advantageous in these circumstances to obtain a good filtrate. The sample may contain impurities such as sand. Pressure filtration is therefore more efficient and enables filtration to be carried out in a wider range of situations. In particular, the pressure can be air pressure. To achieve this, air can be injected into the sampling vessel via a valve V2 (referenced 52). Valve 52 can also be used for cleaning. The pressure exerted in the sampling vessel 12 makes it possible to obtain a filtered volume more quickly - which makes it possible to obtain filtered volumes at a different frequency than under vacuum, for example. Assembly 10 also includes means for taking a sample of phosphoric acid from the space 14 containing phosphoric acid. These means enable the sample to be taken from space 14. Assembly 10 also includes means for conveying the phosphoric acid sample out of space 14 to the sampling vessel 12. The means for taking and the means for conveying enable the sample to be extracted. At this stage, the sample is raw and not yet processed. These means enable the sample to be processed outside space 14. Extraction before processing means that the sample can be processed more quickly outside space 14. If space 14 is a production tank, the taking and conveying means enable the sample to be extracted from the tank and processed outside the tank. This makes it easier to process the sample and obtain more samples. Maintenance operations are also made easier. The means for taking and for conveying can be a valve V1 referenced 51 and pipe 16.

The sampling vessel 12 may include a filter 18. The filter 18 is used to filter the phosphoric acid sample to remove solids. Filtration through the filter 18 is preferably by pressure, which makes the action of the filter faster and applicable in a wider range of conditions of the sample. The filter is, for example, a filter cloth and a grid to support the filter cloth. As the acid sample is filtered through the sampling vessel 12, a cake may form in contact with (on) the filter 18. The cake is formed on the filter by the deposition of particles from the phosphoric acid sample. The cake can be solid, crystallized or not. The cake contributes to the filtering capacity of the sampling vessel 12. In addition, the filtration carried out in the sampling vessel 12 under pressure speeds up the formation of the cake. This means that good filtration conditions can be achieved more quickly, and therefore one or more filtered volumes of phosphoric acid can be obtained more quickly - and therefore possibly faster analyses.

The filter cloth is made of polypropylene, for example. The fabric has an air permeability of between 10 and 1000L/(m².s). Air permeability is the measure used to estimate the filtering capacity of the fabric. The air permeability is for example between 600 and 650L/(m².s), preferably between 620 and 630L/(m².s), more preferably 625L/(m².s). For example, a filter cloth with a permeability of 13L/(m².s) can also be used. The advantage of filtering in the sampling vessel 12 outside the space 14 is that it is easier to work on the filter in any way. The work can be carried out directly on the filter (a change, for example) or by backwashing. In Figure 1, backwashing can be carried out by a fluid such as water introduced into the sampling vessel 12 at the outlet 122 of the sampling vessel 12. A valve V4 referenced 54 is used to introduce the fluid for backwashing.

The sampling vessel 12 may comprise a container in which filtration takes place. The container material is, for example, polypropylene (PP), polyvinyl chloride (PVC) or polycarbonate (PC). Other plastic polymer materials can also be used, such as high density polyethylene (HDPE), polyvinylidene fluoride (PVDF) or polytetrafluoroethene (PTFE). It is also possible to use materials such as Fiber Reinforce Plastic (FRP) or Rubberlined carbon steel or stainless steels. Any pipe or surface mentioned in this document can be made from these materials. The advantage of these materials is that they are corrosion-resistant and easy to clean.

Assembly 10 also comprises means for collecting at least one filtered volume of phosphoric acid at the outlet 122 of sampling vessel 12. The collection means make it possible to recover one or more filtered volumes. Subsequent action can then be taken on the filtered volume or volumes. The means for collecting may be a valve V5 (referenced 55) and a valve V6 (referenced 56). At least one filtered volume may be for discharge 20. Discharge 20 may lead to send back the filtered to the space 14. Valve 55 enables a filtered volume to be collected and sent to discharge 20, thus enabling a volume to be separated if the filtration is not of the quality required for subsequent use. For example, a first or a series of at least two volumes filtered at the outlet of the sampling vessel 12 can be sent to the drain because this or these volumes are obtained very early in the filtration in the sampling vessel 12. In addition, at least one filtered volume may be for subsequent use, for example for analysis. Valve 56 enables one or more filtered volume to be collected and sent to the subsequent use. This makes it possible to retain a filtered volume of the quality required for the subsequent use. For example, the volume or volumes retained for subsequent use are volumes collected after the volume or volumes for discharge 20. Discharge 20 also allows drainage or rinsing.

The means for taking the phosphoric acid sample from space 14 (towards the sampling vessel 12) are able to take the phosphoric acid by gravity from space 14. The sampling vessel is positioned in a part, a lower wall of space 14. The sampling point is positioned at the bottom of space 14 or, in other words, at the low part of space 14. For example, if space 14 is a tank, container or vat, the sample point is positioned at the foot of the tank, container or vat. If space 14 is a pipe, the sample point is in the bottom wall of the pipe. This makes it easy to take a sample - without the need for a pump. For example, the sample is taken by opening a valve, with the sample flowing out of space 14 towards the sampling vessel 12. Alternatively, the sample can be taken from space 14 by pumping or suction.

Assembly 10 may include means for draining the sampling vessel 12. This enables the sampling vessel 12 to be drained. Drainage 22 may be carried out to rinse or to clean the sampling vessel 12. As the sampling vessel 12 is outside the space containing the phosphoric acid, draining 22 is simplified. Drainage 22 can be carried out by gravity or by pumping the phosphoric acid out of the sampling vessel 12. Drainage 22 can also be carried out by air or water flushing. A valve V3 referenced 53 can be provided for this purpose on a drainage pipe. Drainage can also be achieved by valve 55. Assembly 10 may also include means for rinsing (or flushing) the sampling vessel 12. This enables the sampling vessel 12 to be rinsed. Rinsing can be carried out in the same way as draining, with the same advantages. Rinsing may be done with water or with a solution containing phosphorus. Rinsing can be carried out by valve V4 referenced 54.

Assembly 10 enables the sample to be processed, such as analysed. Analysis of the sample enables the composition of the phosphoric acid from which the sample is taken to be checked. This makes it possible to influence the operation of a production line depending on the result of the analysis. The advantage of assembly 10 is that it allows a sample to be taken for analysis, regardless of the sampling point. As the sampling vessel 12 is outside the space 14 from which the sample is taken, filtration and analysis are easy to carry out and as frequently as decided. Assembly 10 includes an analysis unit 24 for analysing the filtered volume obtained at the outlet 122 of sampling vessel 12. The analysis unit 24 can analyse the filtered volume by turbidity, conductimetry, conductivity, spectrometry (mass or plasma) or pH measurement, for example.

In Figure 1, at the level of the analysis unit 24, the assembly 10 may comprise the following elements - as a matter of example, in the case of turbidimetry. A sensor 26 may be placed in the analysis unit 24 - to operate in one of the aforementioned ways. A level detector 28 may be provided to know the quantity present in the analysis unit 24. For example, the level can be determined by laser or ultrasound - to obtain precise measurements. A stirrer 30 can be provided in the analysis unit 24 to stir the phosphoric acid. This enables homogenization and prevents deposits which may be due to possible post-precipitation. Drainage 32, 34 can be achieved by pumping or gravity, respectively via pipes equipped with valves V13 and V14 referenced 513, 514, with the same characteristics and advantages as the aforementioned drainage. Assembly 10 may include means for pressurising the analysis unit 24. This enables the analysis unit 24 to be pressurised, depending on the type of analysis to be carried out. Pressurisation may be achieved by means of a pipe fitted with a valve V11 referenced 511 which allows air to be conveyed into the analysis unit 24. Assembly 10 may also include means for rinsing the analysis unit 24. This enables the analysis unit 24 to be rinsed. Rinsing can be carried out in the same way as draining, with the same advantages. Rinsing can be carried out via a pipe fitted with a V12 valve referenced 512. The rinsing liquid is water, for example. The analysis unit 24 can be calibrated regularly - for example on a daily basis - to obtain good analysis results. The analysis unit 24 can perform an analysis in up to 10 minutes. This allows regular analyses to be carried out. The analyzing may occur several times on the same filtered volume.

Assembly 10 may include a reservoir 36 for an additional solution to perform certain types of analysis. For example, reservoir 36 may contain an aqueous barium chloride (BaCl₂) solution, for example to perform a turbidity analysis. The analysis unit 24 can receive a certain quantity of aqueous barium chloride solution from the reservoir 36 via a volumetric valve 38 and possibly water via the valve 512. Based on the total quantity of water and barium chloride, the filtered volume of phosphoric acid to be analysed is added. Turbidity is analysed by sensor 26. The capacity of the barium chloride reservoir 36 is designed to carry out a certain number of analyses, for example 100 analyses. Liquid barium chloride is preferred for its ease of use and the accuracy of the dosage.

The analysis unit 24 may be connected to the sampling vessel by a pipe. For example, the analysis unit 24 may be connected to the sampling vessel 12 by the pipe fitted with the valve 56. The connection may be direct. The filtered volume of phosphoric acid is conveyed at the outlet 122 of the sampling vessel to the analysis unit 24 via the valve 56. Alternatively, assembly 10 may comprise a homogenisation tank 40 between the sampling vessel 12 and the analysis unit 24. The filtered volume of phosphoric acid is conveyed at the outlet 122 of the sampling vessel 12 to the homogenisation tank 40, before being conveyed to the analysis unit 24. The homogenisation tank 40 allows the filtered volume of phosphoric acid to be diluted with water or aqueous solution. Such dilution may be useful for certain types of analysis, such as turbidity analysis.

In Figure 1, at the level of the homogenisation tank 40, assembly 10 may comprise the following elements. A level sensor 42 may be provided to determine the quantity present in the homogenisation tank. For example, the level can be determined by laser or ultrasound - to obtain precise measurements. Drainage 44, 46 can be carried out by pumping or gravity, respectively by pipes equipped with valves V9 and V10 referenced 59, 510, according to the same characteristics and advantages as the aforementioned drainage. Assembly 10 may include means for pressurising the homogenisation tank 40. This enables the homogenisation tank 40 to be pressurised, depending on the type of homogenisation. Pressurisation may be achieved by means of a pipe fitted with a V7 valve referenced 57, which allows air to be conveyed into the homogenisation tank 40. Valve 57 can also be used for cleaning. Assembly 10 may also include means for rinsing the homogenisation tank 40. This enables the homogenisation tank 40 to be rinsed. Rinsing can be carried out in the same way as draining, with the same advantages. Rinsing can be carried out via a pipe fitted with a V8 valve referenced 58. The rinsing liquid is water, for example. The homogenisation tank 40 makes it possible to obtain a fraction ready for analysis in the analysis unit 24, as frequently as required for analysis. At the outlet of the homogenisation tank 40, the analysis unit 24 can receive, via a sample pump 48, a certain quantity of the fraction to be analysed (corresponding to the "filtered volume" of phosphoric acid mentioned above in connection with the analysis unit 24) and possibly via a valve 549.

Figure 1 shows a filtration phase 60, carried out by the sampling vessel 12. An analysis phase 62 is also possible and is shown in Figure 1. The analysis phase 62 can be carried out by the analysis unit 24, and depending on the type of analysis, a dilution in the homogenisation tank 40 can be carried out before the analysis.

A method for treating phosphoric acid may be as follows. A sample of phosphoric acid can be taken from the space 14 containing the phosphoric acid. The sample is then conveyed out of space 14 to the sampling vessel 12. The phosphoric acid sample can then be supplied to the sampling vessel 12 via inlet 121. The sampling vessel 12 is used to filter the phosphoric acid sample. The method may also include the collection of at least one filtered volume at the outlet of the sampling vessel 12, enabling subsequent actions. The method comprises the other features described in relation to assembly 10, with the same advantages. For example, the method may include a step of creating the cake in contact with the filter 18.

Further operating details of the assembly 10 are now described, in connection with the method and assembly 10 described. Phosphoric acid - such as a phosphoric acid slurry by way of example - is introduced into the sampling vessel 12, for example by gravity or pumping - from a withdrawal point via valve 51. This valve 51 may be an automatic butterfly valve. The phosphoric acid can be filtered in the sampling vessel 12, for example at a pressure of 2-3 bar. Air is introduced through valve 52 to pressurise the sampling vessel 12. At the outlet of the sampling vessel 12, a first volume or several volumes are sent to the discharge 20 (or drain) via valve 55. This first volume or these first volumes may contain particles (such as solid particles) unsuitable for subsequent processing such as analysis. Once the filtered volume is clear, the volume can be sent via valve 56 to the analysis unit 24, possibly via the homogenisation tank 40. After use, the sampling vessel 12 can be cleaned (including rinsing and drying). The same applies to the homogenisation tank 40. Cleaning can be carried out with air and/or water or aqueous solution via valves 52 (air) and 54 (water) for the sampling vessel 12 and valves 57 (air) and 58 (water) for the homogenisation tank 40. Cleaning may also include backwashing the filter 18 if necessary. In particular, backwashing the filter enables the cake to be cleaned. The cake, mixed with water, can be returned to the sample collection point, in space 14, via valve 51. In addition, as filtration is carried out under pressure, a new cake can be created quickly, so that a clear filtered volume or volumes can be obtained quickly again for subsequent use. The sampling vessel 12 and the homogenisation tank 40 can be drained via valves 53/55 and 59/510 respectively.

A sequence of operation of assembly 10 is now described, in connection with the method and assembly 10 described, as a matter of example. This is an operation in which a sulphate analysis sequence is performed. The sulphate concentration in phosphoric acid is a key parameter for the production of phosphoric acid. The analysis in analysing unit 24 is done by turbidity.

The analysis unit 24 is initially flushed with air (or water) by opening valves 511 and 514, as well as the sampling vessel 12 by opening valves 53 and 55. Valves 511 and 514 can be kept open. The valves are then closed. A sample of phosphoric acid is then introduced into the sampling vessel 12. Valves 51 and 53 (to favor gravity flow) are opened. A certain amount of time is waited until a level detector in the sampling vessel 12 is triggered. The valves are then closed. The phosphoric acid sample (possibly phosphoric acid slurry) is then filtered. Valves 52 and 55 are opened to pressurise the sampling vessel 12 for filtration and to discharge the first filtered volumes. The valves are closed. The next sequence consists of introducing a filtered volume of phosphoric acid into the homogenisation tank 40. Valves 52, 56 and 59 are opened. A certain amount of time is waited until the level detector 42 is triggered. The valves are then closed. The analysis unit 24 is then filled with water. Valves 512 and 513 (to favor flow) are opened. A certain amount of time is waited until the level detector 28 is triggered. The valves are then closed. The level is measured, for example by ultrasound, to determine the exact volume of water (Vw). Stirrer 30 is started as soon as a specific level is reached. Valve 549 is opened and the sample is dosed with the sample pump 48. The pump pulses are adjusted on the basis of the Vw/Vs ratio (Vs being the filtered volume of phosphoric acid). The additive (for instance BaCl₂)is then dosed from reservoir236. The pump pulses are adjusted on the basis of the Vw/Vs ratio. The turbidity is then measured. At time T1, the results are calculated and displayed. Stirrer 30 is stopped. The sampling vessel 12 is then flushed with air. Valves 51 (to also flush pipe 16) and 52 are opened for time T2. The sampling vessel 12 is then washed with water. Valves 53 and 54 are opened for time T4. The sampling vessel 12 is then flushed and drained with air. Valves 52 and 55 are opened for a time T5. The homogenisation tank 40 is flushed with air. Valves 57 and 510 are opened for a time T6. The homogenisation tank 40 is filled with water until the level detector 42 is triggered. The sampling vessel 12 is flushed with water (in counter-current mode). Valves 55, 56, 57 are opened for a time T3 (to process the water contained in the homogenisation tank 40). The sampling vessel 12 is then flushed and drained with air. Valves 52 and 55 are opened for a time T4. The pipe between the sampling vessel 12 and the homogenisation tank 40 is then flushed with air. Valves 52, 56 and 510 are opened for a time T5. The homogenisation tank 40 is flushed with air. Valves 57 and 510 are opened for a time T6. The homogenisation tank 40 is flushed with water. Valves 58 and 510 are opened for a time T7. The homogenisation tank 40 is then filled with water. Valves 58 and 59 are opened for a time T7. The pipe between the homogenisation tank 40 and the analysis unit 24 is flushed with water. Valves 57, 513 and 549 are opened for a time T11. The analysis unit 24 is then flushed with air. Valves 511 and 514 are opened for a time T8. The analysis unit 24 is filled with water until the level detector 28 is triggered. Valves 512 and 513 are opened

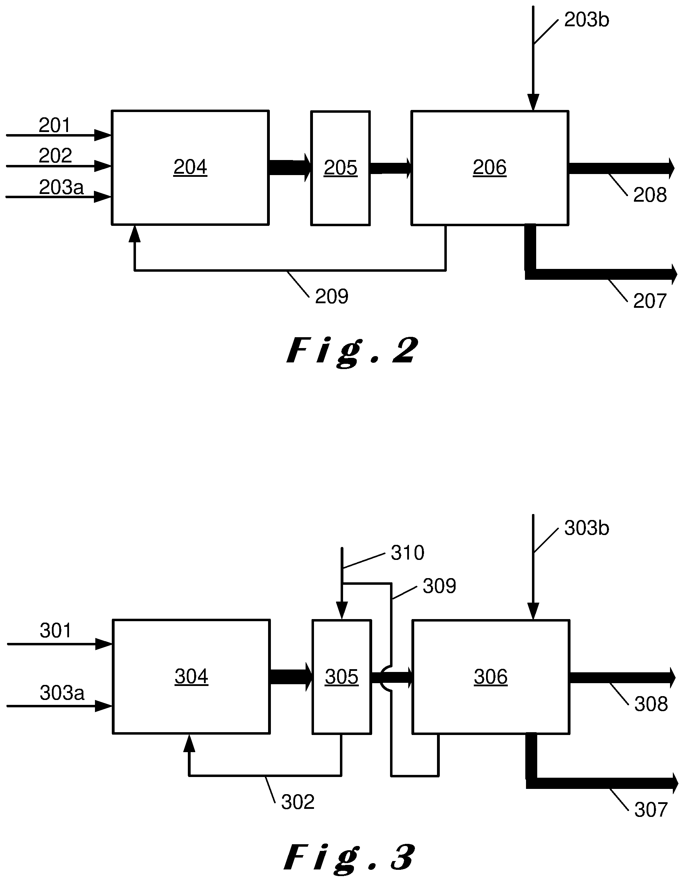

The sampling point of the space 14 can be of any type. It could be a phosphoric acid production reservoir, or any of the points described by way of example in relation to Figures 2-5. These figures illustrate examples of possible context of use.

Figure 2 shows a dihydrate process. In this process, phosphate source 201, sulphuric acid 202 and optionally water 203a are introduced into an attack tank 204. A reaction step is carried out. The reacted elements are then introduced into a maturation (or an ageing) tank 205. A filtration step is then carried out using a dihydrate filter 206. Optionally water 203b is introduced. Finally, a concentration step is carried out on the acid obtained at 208. By-products (gypsum cake) are taken from 207. A weak phosphoric acid pipe 209 may be between the filter 206 and the tank 204. A phosphoric acid sample may be taken from the space 14 that can be a tank 204, a tank 205, a pipe 208 or a pipe 209 and sent to the sample vessel 12.

Figure 3 shows a hemihydrate process. In this process, phosphate source 301 and optionally water 303a are introduced into an attack tank 304. A reaction step is carried out. The reacted elements are then introduced into a second reaction tank 305. A reaction stage is carried out, by addition of sulfuric acid 310. A slurry recirculation may occur via pipe 302. A filtration step is then carried out using a hemihydrate filter 306. Optionally water 303b is introduced. Finally, a concentration step is carried out on the acid obtained at 308. By-products (hemi-hydrate calcium sulfate) are taken in 307. A pipe 309 of weak phosphoric acid is reintroduced into tank 305. A phosphoric acid sample may be taken from the space 14 that can be at a tank 304, a tank 305, a pipe 308 or a pipe 309 and sent to the sample vessel 12.

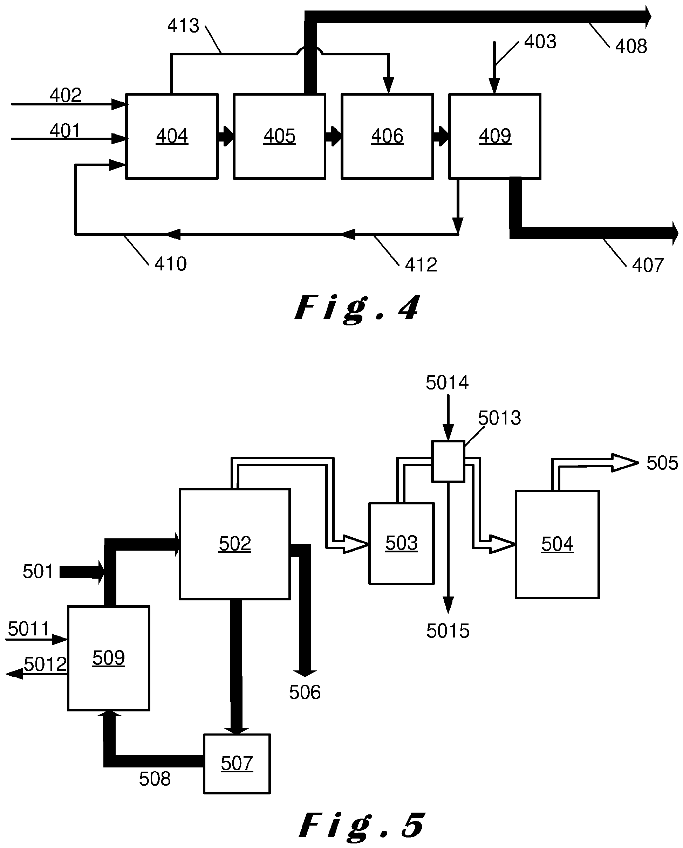

Figure 4 shows a di-hemihydrate process. In this process, phosphate source 401 and sulphuric acid 402 and optionally water 403 are introduced into an attack tank 404. A reaction step is carried out. The reacted elements are then filtered with a dihydrate filter 405. A conversion (or dehydration) stage is then carried out in a tank 406. A by-pass 413 between attack tank 404 and tank 406 is possible. Then a hemihydrate filter 409 is used to filter the elements. Optionally water 403 is injected into hemihydrate filter 409. Finally, a concentration step is carried out on the acid obtained at 408. By-products are taken in 407. Pipes 410, 412 of weak phosphoric acid are used to reintroduce them into tank 404. A sample of phosphoric acid may be taken from the space 14 that can be a 404 tank, a 406 tank, pipes 410, 412, 413 or a concentration point 408 and sent to the sample vessel 12.

Figure 5 shows a phosphoric acid concentration process. Independently or after figures 2-4, the acid is concentrated (as depicted on figure 5) and then, possibly, stored and used to sell or to produce fertilizers and salts. The evaporator 502 is connected to a separator 503 which is connected to a condenser 504. A fluorine recovery may occur at module 5013. Water 5014 is introduced into module 5013 and fluosilicic acid 5014 is recovered. The condenser 504 is connected to a vacuum system 505. In addition, the evaporator 502 is connected to a circulation pump 507, an acid product being taken from the sampling point 506. The pump 507 is connected to a heat exchanger 509 by a pipe 508. The heat exchanger 509 is connected to the evaporator 502. Steam may be injected at 5011 into heat exchanger 509 and steam may be taken out at 5012 out of heat exchanger 509. The sampling point for a phosphoric acid sample can be at the introduction point 501, at the sampling point 506, in the pipe 508 and sent to the sample vessel 12.

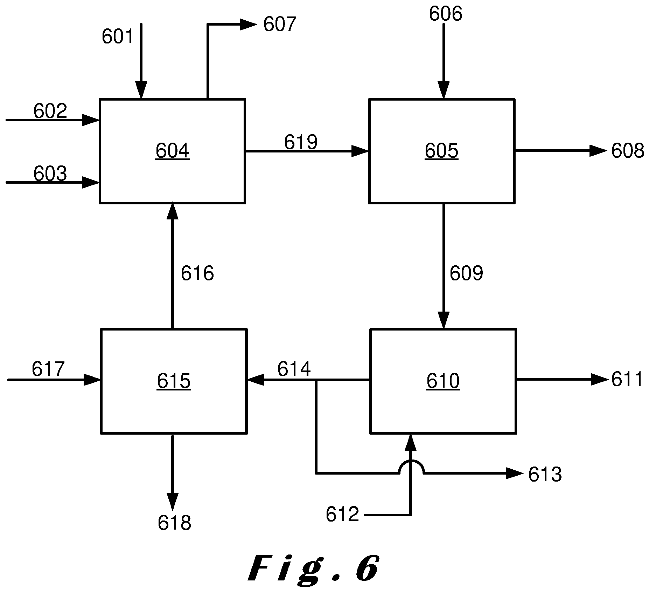

Figure 6 shows an Ecophos ^{®} process. In this process, phosphate source 601, hydrochloric acid 602 and optionally water 603 are introduced into an attack tank 604. A first reaction step is carried out. By-products (impurities, such as rock residues) are taken at 607. A solution containing phosphate and calcium ions is then introduced in a second tank 605 via pipe 619. A calcium source (such as CaCOs) is injected at 606 into tank 605. From tank 605, a calcium chloride (CaCl₂) solution is transferred to a module 610 via pipe 609 and DCP feed grade (Dicalcium Phosphate (reaction of calcium source with solution containing phosphate and calcium ions gives DCP)) are extracted at 608. A base (ex : Calcium hydroxide (Ca(OH)₂)) is inserted at 612 into module 610. From module 610, a second residue is extracted at 611 and pure CaCl₂ solution is sent by pipe 614 into an optional module 615. CaCl₂ bleed is extracted via pipe 613 from pipe 614. Sulfuric acid H₂SO₄ is injected at 617 into the module 615. Hydrochloric acid is extracted from module 615 and injected into tank 604 via pipe 616. Pure gypsum is extracted via pipe 618 from module 615. A phosphoric acid sample may be taken from the space 14 that can be at tank 604, tank 605, pipe 616, pipe 609, pipe 614, pipe 619 and sent to the sample vessel 12.

The assembly is notably suitable for use in the preparation of phosphoric acid. in solution but also in the preparation of monocalcium phosphate solutions or an aqueous solution containing phosphorus, such as solution of phosphoric acid salts.

For the sake of simplicity, not all the pipes between the various parts mentioned are explained in detail or referenced in the figures. However, they are illustrated in the figures.

The present invention has been described in relation to the specific embodiments which have a value that is purely illustrative and should not be considered to be limiting. The skilled person will notice that the invention is not limited to the examples that are illustrated and/or described here above. The invention comprises each of the new technical characteristics described in the present document, and their combinations.

## Claims

1. An assembly (10) for processing a phosphoric acid sample, comprising
- A sampling vessel (12) suitable for filtering the phosphoric acid sample under pressure,
- Means for taking the phosphoric acid sample from a space (14) containing phosphoric acid and means for conveying the phosphoric acid sample out of the space (14) to the sampling vessel (12),
- At the outlet of the sampling vessel (12), means for collecting at least one filtered volume of phosphoric acid sample.

2. The assembly (10) according to the preceding claim, wherein the sampling vessel (12) comprises a filter (18) for filtering the phosphoric acid sample under pressure, preferably under air pressure.

3. The assembly (10) according to any one of the preceding claims, further comprising members from among
- Means for backwashing the filter (18), if applicable,
- Means for pressurizing the sampling vessel (12) to filter the phosphoric acid sample under pressure, preferably under air pressure,
- Means for draining the assembly,
- Means for rinsing the assembly.

4. The assembly (10) according to any one of the preceding claims, wherein the means for collecting are suitable for collecting filtered volumes, at least one filtered volume being for evacuation and/or at least one filtered volume being for analysis.

5. The assembly (10) according to the preceding claims, wherein the space (14) containing phosphoric acid is a phosphoric acid production reactor, a pipe, a concentration point, a phosphoric acid pipe, a tank, an ageing tank, a weak phosphoric acid pipe, a dihydrate filter, a dehydration tank, a conversion tank.

6. The assembly (10) according to any one of the preceding claims, wherein the sample vessel (12) comprises a container made of a material chosen in the group comprising polypropylene, polyvinyl chloride, polycarbonate, high density polyethylene, polyvinylidene fluoride, polytetrafluoroethene, Fiber Reinforce Plastic, Rubberlined carbon steel or stainless steels.

7. The assembly (10) of any one of the preceding claims, wherein the means for taking are suitable for taking the phosphoric acid sample by gravity from the space (14) containing phosphoric acid.

8. The assembly (10) according to any one of the preceding claims, further comprising an analyzing unit for analyzing at least one filtered volume, preferably the analyzing unit being suitable for analyzing the filtered volume by turbidity, conductimetry, mass spectrometry or pH measurement.

9. The assembly (10) according to any one of the preceding claims, further comprising, between the sampling vessel (12) and the analyzing unit, an homogenization tank suitable for diluting the filtered volume for analysis.

10. A method for processing a phosphoric acid sample, comprising the steps of
- Taking the phosphoric acid sample from a space containing phosphoric acid and conveying the phosphoric acid sample out of the space to a sampling vessel,
- Providing the sampling vessel with the phosphoric acid sample,
- Filtering by pressure the phosphoric acid sample in the sampling vessel,
- Collecting at least one filtered volume from the sampling vessel.

11. The method according the preceding claim, the step of collecting comprising collecting at least one filtered volume for evacuation and/or collecting at least one filtered volume for analysis.

12. The method according to the preceding claims, further comprising a step of analyzing the filtered sample volume, preferably by turbidity conductimetry, mass spectrometry or pH measurement.

13. The method according to any one of the preceding claims, further comprising, in an homogenization tank, a step of diluting the filtered volume for analysis, preferably, a stirring occurring in the homogenization tank during the step of diluting.

14. The method according to the preceding claim, further comprising several steps of analyzing the same filtered volume.

15. The method according to one of the preceding claims, wherein the sampling vessel (12) comprises a filter for filtering the phosphoric acid sample under pressure, the method further comprising a step of creating a cake in contact of the filter.
